# EUROPÄISCHE PATENTSCHRIFT

(11) **EP 4 267 277 B1**
(45) Veröffentlichungstag und Bekanntmachung des Hinweises auf die Patenterteilung: **03.06.2026**
(21) Anmeldenummer: 22769258.9
(22) Anmeldetag: 26.08.2022
(51) Int. Cl.: B01D 46/00, B01D 46/52, B01D 45/08, B01D 50/20

(54) **VERFAHREN ZUM ERHALT EINER ABSCHEIDEVORRICHTUNG**
METHOD FOR OBTAINING A SEPARATION DEVICE
PROCÉDÉ POUR OBTENIR UN DISPOSITIF DE SÉPARATION

(30) Priorität: 14.09.2021 DE 202021104962 U
(43) Veröffentlichungstag der Anmeldung: 01.11.2023
(73) Patentinhaber: NeuFilter GmbH, 48599 Gronau (DE)
(72) Erfinder: BÖING, Thomas, 48599 Gronau (DE); HENKE, Daniel, 48599 Gronau (DE)
(74) Vertreter: Werner & ten Brink PAe PartGes mbB Bentheim
(86) Internationale Anmeldenummer: PCT/EP2022/073839
(87) Internationale Veröffentlichungsnummer: WO 2023/041310

(56) Entgegenhaltungen:
- CN-U- 209 985 061
- US-A- 3 321 345
- US-A1- 2006 236 876

## Beschreibung

Die hier vorgeschlagene Neuerung betrifft das technische Gebiet des Abscheidens von mit einem Luftstrom (Rohgasstrom) mitgeführten Partikeln, insbesondere das Abscheiden von mit einem sogenannten Farbnebel als Rohgasstrom mitgeführten Farb- oder Lackpartikeln (Farbnebelabscheidung). Vorrichtungen, nämlich Abscheidevorrichtungen, zu diesem Zweck sind bereits bekannt, zum Beispiel in Form der in der EP 2 532 409 B beschriebenen und dort als Filtermodul bezeichneten Abscheidevorrichtung oder in Form der in der DE 10 2014 003 608 A1 beschriebenen und dort ebenfalls als Filtermodul bezeichneten Abscheidevorrichtung oder in Form der in der CN 209985061 U beschriebenen Vorrichtung.

Eine Aufgabe der vorgeschlagenen Neuerung besteht darin, eine weiter verbesserte Form einer Abscheidevorrichtung anzugeben, insbesondere eine verbesserte Form der aus der EP 2 532 409 B bekannten Abscheidevorrichtung oder einer vergleichbaren Abscheidevorrichtung.

Eine Abscheidevorrichtung, von der die hier vorgeschlagene Neuerung ausgeht, umfasst einen äußeren Rahmen, welcher in seinem Innern ein Abscheideelement oder mehrere Abscheideelemente aufnimmt. Im Betrieb wird eine solche Abscheidevorrichtung von dem mit Partikeln belasteten Rohgasstrom durchströmt. Der äußere Rahmen der Abscheidevorrichtung weist entsprechend jeweils eine großflächige Öffnung für den Eintritt des Rohgasstroms (Einströmöffnung) sowie für den Austritt des Rohgasstroms (Ausströmöffnung) auf.

Die eingangs genannte Aufgabe wird erfindungsgemäß mittels eines Verfahrens zum Erhalten einer Abscheidevorrichtung mit den Merkmalen des Anspruchs 1 gelöst. Diese ist zum Abscheiden von mit einem Rohgasstrom mitgeführten Partikeln bestimmt. Sie weist einen Rahmen zur Aufnahme zumindest eines Abscheideelements auf und der Rahmen weist im betriebsbereiten Zustand zumindest zwei Öffnungen auf, nämlich eine Einströmöffnung und eine Ausströmöffnung.

Die Besonderheit der hier vorgeschlagenen Abscheidevorrichtung besteht darin, dass das Rahmenmaterial, welches vor dem Öffnen dieser Öffnungen diese verschließt, zum Erhalt einer an der Abscheidevorrichtung anbringbaren Vorabscheideeinheit verwendbar ist. Mit anderen Worten besteht die Besonderheit darin, dass vor dem Öffnen der Öffnungen die Öffnungen verschließendes Rahmenmaterial zum Erhalt einer an der Abscheidevorrichtung anbringbaren Vorabscheideeinheit verwendbar ist.

Das vor dem Öffnen der Öffnungen die Öffnungen verschließende Rahmenmaterial wird im Folgenden als Deckel bezeichnet und aufgrund der Einströmöffnung und der Ausströmöffnung ergeben sich zwei Deckel (Einströmöffnungsdeckel, Ausströmöffnungsdeckel). Die beiden Deckel sind nach dem Öffnen der Öffnungen zu einer Vorabscheideeinheit kombinierbar und die Deckel oder die damit gebildete Vorabscheideeinheit sind bzw. ist im Bereich der Einströmöffnung am Rahmen der Abscheidevorrichtung anordenbar. Weil die Vorabscheideeinheit mittels der beiden Deckel gebildet wird, können diese auch als Vorabscheideeinheitsteile bezeichnet werden; der Einströmöffnungsdeckel ist ein erstes Vorabscheideeinheitsteil und der Ausströmöffnungsdeckel ist ein zweites Vorabscheideeinheitsteil.

Die eingangs genannte Aufgabe wird erfindungsgemäß auch mittels eines Verfahrens zum Erhalt einer zusammen mit einer Abscheidevorrichtung verwendbaren Vorabscheideeinheit gelöst. Die Abscheidevorrichtung weist, wie vorstehend und im Folgenden beschrieben, einen Rahmen zur Aufnahme zumindest eines Abscheideelements sowie im betriebsbereiten Zustand zwei Öffnungen im Rahmen auf, nämlich eine Einströmöffnung und eine Ausströmöffnung. Das vor dem Öffnen der Öffnungen diese verschließende Rahmenmaterial fungiert als erster Deckel und als zweiter Deckel. Zum Erhalt der Vorabscheideeinheit werden die beiden Deckel nach dem Öffnen der Öffnungen miteinander kombiniert und die resultierende Vorabscheideeinheit wird im Bereich einer der Öffnungen, nämlich der Einströmöffnung, am Rahmen angeordnet.

Aus der US 2006/236876 A1 und der US 3,321,345 A sind jeweils Abscheidevorrichtungen mit einem Rahmen zur Aufnahme eines Abscheideelements sowie zwei zunächst verschlossenen Öffnungen im Rahmen bekannt. Die Öffnungen ergeben sich nach dem Entfernen des jeweiligen Rahmenmaterials. Dieses wird allerdings - anders als hier vorgeschlagen - nicht weiter verwendet und offenbar weggeworfen.

Der Vorteil der hier vorgeschlagenen Neuerung besteht darin, dass das die Öffnungen verschließende Rahmenmaterial - die Deckel - nicht weggeworfen wird und vielmehr einer konkreten und nützlichen Bestimmung zugeführt wird. Indem die Deckel zu einer Vorabscheideeinheit kombiniert werden, ergibt sich eine zusammen mit der Abscheidevorrichtung verwendbare weitere Abscheidestufe, so dass die Abscheideleistung der Abscheidevorrichtung erhöht wird. Ein weiterer Vorteil der hier vorgeschlagenen Neuerung besteht darin, dass die Kombination der Deckel zu einer Vorabscheideeinheit und das Anbringen der Vorabscheideeinheit an der Abscheidevorrichtung komplett werkzeuglos erfolgen kann und zudem auch ohne nennenswerten Zeitaufwand erfolgen kann.

Die hier vorgeschlagene Neuerung ist damit insgesamt auch die Verwendung von Rahmenmaterial einer zum Abscheiden von mit einem Rohgasstrom mitgeführten Partikeln bestimmten Abscheidevorrichtung als zu einer Vorabscheideeinheit kombinierbare Deckel, wobei die Abscheidevorrichtung einen Rahmen zur Aufnahme zumindest eines Abscheideelements sowie im betriebsbereiten Zustand zwei Öffnungen im Rahmen aufweist und wobei das Rahmenmaterial vor einem Öffnen der Öffnungen diese Öffnungen verschließt. Die Deckel oder das als Deckel fungierende Rahmenmaterial weisen bzw. weist einzelne oder alle nachfolgend beschriebenen Merkmale auf.

Die vorgeschlagene Neuerung umfasst damit schließlich auch die Verwendung einer Abscheidevorrichtung wie hier und im Folgenden beschrieben zusammen mit einer damit kombinierten und aus Rahmenmaterial der Abscheidevorrichtung gebildeten Vorabscheideeinheit zum Abscheiden von mit einem Rohgasstrom mitgeführten Partikeln.

Vorteilhafte Ausgestaltungen der Erfindung sind Gegenstand der weiteren Ansprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform der gegenständlichen Vorrichtung nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen.

Zu der hier vorgeschlagenen Abscheidevorrichtung gehören auch ein Verfahren zum Erhalt einer zusammen mit der Abscheidevorrichtung verwendbaren Vorabscheideeinheit sowie die Verwendung von Rahmenmaterial einer Abscheidevorrichtung als zu einer Vorabscheideeinheit kombinierbare Deckel. Zur Vermeidung unnötiger Wiederholungen gilt für die weitere Beschreibung, dass Merkmale und Details, die im Zusammenhang mit der Abscheidevorrichtung oder der Vorabscheideeinheit beschrieben sind, selbstverständlich auch im Zusammenhang mit und für ein Verfahren zum Erhalt einer zusammen mit einer Abscheidevorrichtung verwendbaren Vorabscheideeinheit sowie mit und für die Verwendung von Rahmenmaterial einer Abscheidevorrichtung als zu einer Vorabscheideeinheit kombinierbare Deckel und umgekehrt gelten. Dementsprechend kann das Verfahren auch mittels einzelner oder mehrerer Verfahrensmerkmale fortgebildet sein, die sich auf die Funktion oder die Gestaltung einzelner oder mehrerer Merkmale der Abscheidevorrichtung oder der Vorabscheideeinheit beziehen, und die Abscheidevorrichtung oder die Vorabscheideeinheit können entsprechend durch aufgrund des Verfahrens resultierender Merkmale fortgebildet sein. Folglich gelten Merkmale und Details, die im Zusammenhang mit dem Verfahren beschrieben sind, selbstverständlich auch im Zusammenhang mit und für die Abscheidevorrichtung oder die Vorabscheideeinheit und jeweils umgekehrt, so dass bezüglich der Offenbarung zu den einzelnen Aspekten der vorgeschlagenen Neuerung stets wechselseitig Bezug genommen wird bzw. werden kann.

Bei bevorzugten Ausführungsformen der Abscheidevorrichtung sind die Deckel mittels einer Steckverbindung werkzeuglos lösbar miteinander verbindbar, zum Beispiel mittels seitlich umgeknickter Laschen eines Deckels, die in dafür bestimmte Ausnehmungen im anderen Deckel einsteckbar sind und zum Erhalt einer Vorabscheideeinheit dort eingesteckt werden.

Die mit der Anmeldung eingereichten Ansprüche sind Formulierungsvorschläge ohne Präjudiz für die Erzielung weitergehenden Schutzes. Da speziell die Merkmale der abhängigen Ansprüche im Hinblick auf den Stand der Technik am Prioritätstag eigene und unabhängige Erfindungen bilden können, behält die Anmelderin sich vor, diese oder noch weitere, bisher nur in der Beschreibung und/oder Zeichnung offenbarte Merkmalskombinationen zum Gegenstand unabhängiger Ansprüche oder Teilungserklärungen zu machen. Sie können weiterhin auch selbständige Erfindungen enthalten, die eine von den Gegenständen der jeweils in Bezug genommenen Ansprüche unabhängige Gestaltung aufweisen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- Fig. 1: eine bekannte Abscheidevorrichtung mit einer Einströmöffnung und einer Ausströmöffnung,
- Fig. 2: und
- Fig. 3: eine Abscheidevorrichtung mit einer verschlossene Einströmöffnung und einer verschlossenen Ausströmöffnung, wobei das die Einströmöffnung und die Ausströmöffnung jeweils verschließende Rahmenmaterial zum Erhalt einer an der Abscheidevorrichtung anbringbaren Vorabscheideeinheit verwendbar ist,
- Fig. 4: und
- Fig. 5: eine Abscheidevorrichtung gemäß Fig. 2 und Fig. 3 mit einer Vorabscheideeinheit.

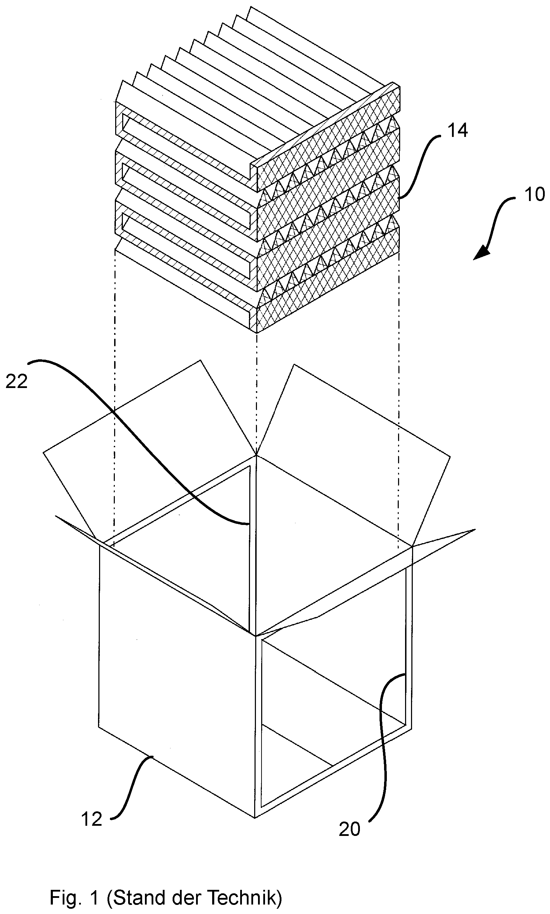

Die Darstellung in Figur 1 zeigt beispielhaft und mittels der Bildelemente der Darstellung in Figur 1 der EP 2 532 409 B eine Abscheidevorrichtung 10 und zwar in Form einer Momentaufnahme bei deren Herstellung. Eine Abscheidevorrichtung und auch die dargestellte Abscheidevorrichtung 10 umfassen einen äußeren Rahmen 12 und in dem Rahmen 12 zumindest ein Abscheideelement 14. Bei dem Rahmen 12 handelt es sich zum Beispiel um einen herkömmlichen Karton, wie er ansonsten auch für Verpackungs- und/oder Versandzwecke verwendet wird. Das zumindest eine Abscheideelement 14 wird/ist in dem Rahmen 12 platziert. Die strichpunktierten Linien zeigen, wie und wo das Abscheideelement 14 im Rahmen 12 platziert wird. In der Darstellung in Figur 1 ist der Karton (der Rahmen 12) zwecks Aufnahme des Abscheideelements 14 noch offen. Nach Aufnahme des Abscheideelements 14 wird der Karton (der Rahmen 12) geschlossen, zum Beispiel zugeklebt.

In der EP 2 532 409 B handelt es sich bei dem Abscheideelement 14 um eine mehrfach umgelegte Papiergelegefilterbahn. Auf eine jeweilige Art des Abscheideelements 14 sowie auf eine jeweilige Anzahl von Abscheideelementen 14 kommt es für die hier vorgeschlagene Neuerung ausdrücklich nicht an und entsprechend gilt als Abscheidevorrichtung 10 eine zum Abscheiden von mit einem Luftstrom mitgeführten Partikeln, insbesondere Farbpartikeln, bestimmte Abscheidevorrichtung 10 mit einem äußeren Rahmen 12 und zumindest einem darin platzierten Abscheideelement 14.

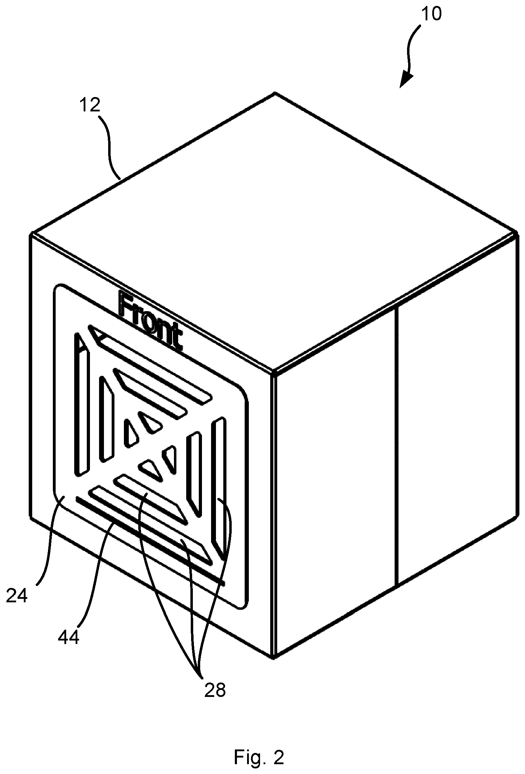

Der Rahmen 12 der hier vorgeschlagenen Abscheidevorrichtung 10 (Fig. 2ff) fungiert als Gehäuse. Der Rahmen 12 ist ein Gehäuse, nämlich ein Gehäuse für das zumindest eine Abscheideelement 14 im Innern des Rahmens 12 (im Innern des Gehäuses). Als Rahmen 12 kommt stets ein Karton wie oben erwähnt oder wie bei der EP 2 532 409 B in Betracht. Bei jeder Erwähnung des Begriffs Rahmen ist entsprechend ein als Rahmen 12 fungierender Karton stets mitzulesen und der Begriff Rahmen umfasst zumindest den Begriff Karton, umfasst aber auch andere Möglichkeiten zur Aufnahme zumindest eines Abscheideelements 14, zum Beispiel eine Kiste aus Holz, Metall, Kunststoff oder dergleichen.

Wesentlich ist, dass der Rahmen 12 zwei großflächige Öffnungen 20, 22 aufweist. Im Betrieb wird die Abscheidevorrichtung 10 von einem mit Partikeln, zum Beispiel Farbpartikeln, belasteten Luftstrom (Rohgasstrom) durchströmt. Dieser tritt durch eine der Öffnungen 20, 22 in den Rahmen 12 - und damit in die Abscheidevorrichtung 10 insgesamt - ein. Bei einer der Öffnungen 20 handelt es sich entsprechend um die Eintrittsöffnung oder Einströmöffnung 20. Der Rohgasstrom tritt durch die andere Öffnung 22 wieder aus dem Rahmen 12 - aus der Abscheidevorrichtung 10 - aus. Bei dieser Öffnung 22 handelt es sich entsprechend um die Austrittsöffnung oder Ausströmöffnung 22. In der Darstellung in Figur 1 laufen die Bezugslinien jeweils zu einer Randlinie dieser Öffnungen 20, 22. Beim Durchströmen der Abscheidevorrichtung 10 tritt der Rohgasstrom durch das zumindest eine Abscheideelement 14 im Innern des Rahmens 12 hindurch, so dass dort in grundsätzlich an sich bekannter Art und Weise eine Abscheidung von mit dem Rohgasstrom mitgeführten Partikeln stattfindet.

Im Auslieferungszustand einer Abscheidevorrichtung 10 sind die Einströmöffnung 20 und die Ausströmöffnung 22 üblicherweise verschlossen. Dies gewährleistet zum Beispiel einen Schutz des zumindest einen im Innern des Rahmens 12 befindlichen Abscheideelements 14. Geschlossene Öffnungen 20, 22 bedeuten, dass der Rahmen 12 zum Herstellen durchströmbarer Öffnungen 20, 22 geöffnet wird. Dafür sind die Form und die Größe der Öffnungen 20, 22 zum Beispiel durch eine Perforation oder dergleichen des Materials des Rahmens 12 vorgegeben. Ein Öffnen der Ein- und Ausströmöffnung 20, 22 erfolgt also, indem das die Öffnungen 20, 22 verschließende Rahmenmaterial jeweils zumindest teilweise aus dem Rahmen 12 gelöst wird. Das durch eine Perforation oder dergleichen begrenzte Rahmenmaterial wird im Folgenden als Deckel 24, 26 (Fig. 2ff) bezeichnet. Angesichts der Ein- und Ausströmöffnung 20, 22 umfasst der Rahmen 12 einen Einströmöffnungsdeckel 24 sowie einen Ausströmöffnungsdeckel 26 und es ergeben sich beim Öffnen der Ein- und Ausströmöffnung 20, 22 ein Einströmöffnungsdeckel 24 sowie ein Ausströmöffnungsdeckel 26.

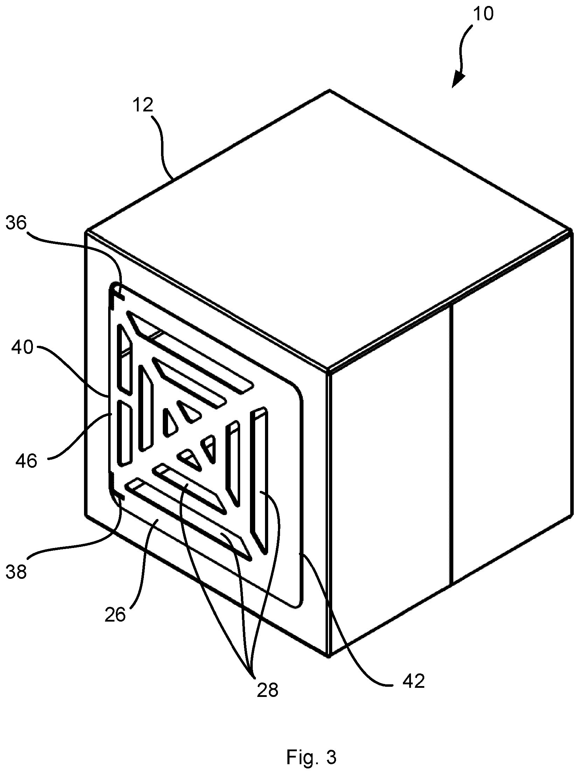

Die Darstellungen in Figur 2 und Figur 3 zeigen isometrische Ansichten einer Abscheidevorrichtung 10 im Auslieferungszustand. Bei der Darstellung in Figur 2 fällt der Blick unter anderem auf diejenige Seitenfläche des Rahmens 12, welche im Betrieb als angeströmte Seite (vom Rohgasstrom angeströmt) fungiert und die (bei der gezeigten Konfiguration) noch mittels des Einströmöffnungsdeckels 24 verschlossene Einströmöffnung 20 aufweist. Bei der Darstellung in Figur 3 fällt der Blick unter anderem auf diejenige Seitenfläche des Rahmens 12, welche im Betrieb der angeströmten Seite gegenüberliegt und die (bei der gezeigten Konfiguration) noch mittels des Ausströmöffnungsdeckels 26 verschlossene Ausströmöffnung 22 aufweist. Bei einer Verwendung der Abscheidevorrichtung 10 zum Abscheiden von mit einem Rohgasstrom mitgeführten Partikeln, also im betriebsbereiten Zustand, sind die Einströmöffnung 20 und die Ausströmöffnung 22 geöffnet. In der Darstellung in Figur 2 ist die angeströmte Seite lediglich zur Orientierung und zum Zwecke der Unterscheidung mit dem Text "Front" bezeichnet.

Die beiden Deckel 24, 26 (Einströmöffnungsdeckel 24, Ausströmöffnungsdeckel 26) sind bevorzugt strukturiert, zum Beispiel indem diese eine Mehrzahl von Löchern 28 (nur einzelne bezeichnet) aufweisen. Auf die Anzahl, die Form und/oder die Verteilung der Löcher 28 kommt es nicht an und die Darstellung ein den Figuren ist ausdrücklich nur ein Beispiel. Im Falle einer Strukturierung der Deckel 24, 26 mittels einer Mehrzahl von Löchern 28 sind die Deckel 24, 26 gelocht. Mit anderen Worten: Im Falle einer Strukturierung der Teile 24, 26 mittels einer Mehrzahl von Löchern 28 weisen die Deckel 24, 26 aufgrund der Löcher 28 eine gitterartige Form auf, wobei als Löcher 28 - wie beispielhaft gezeigt - Gruppen unterschiedlich großer Löcher 28 in Betracht kommen.

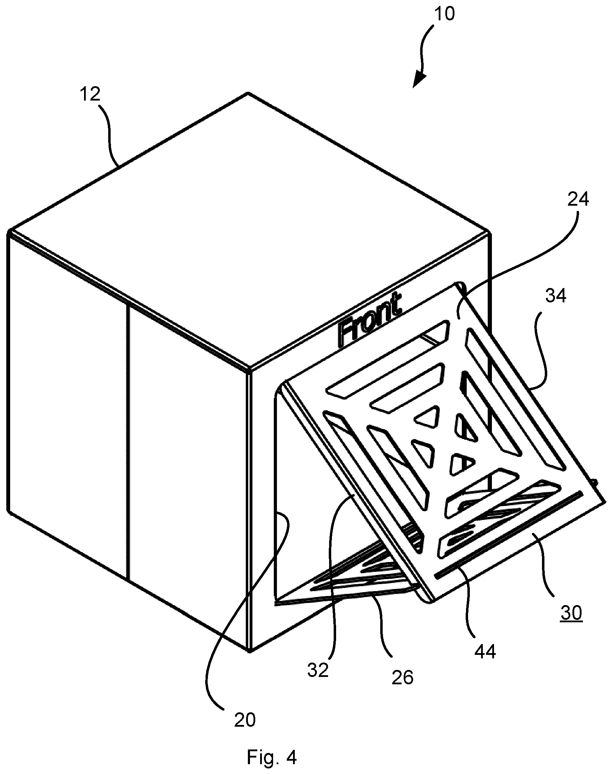

Die Darstellung in Figur 4 zeigt eine isometrische Ansicht der Abscheidevorrichtung 10 gemäß Figur 2 und Figur 3 mit geöffneter Einströmöffnung 20 (die nicht sichtbare Ausströmöffnung 22 ist ebenfalls geöffnet), wobei die beim Öffnen der Öffnungen 20, 22 (Ein- und Ausströmöffnung 20, 22) erhaltenen Deckel 24, 26 zu einer Vorabscheideeinheit 30 kombiniert sind. Diese Kombination der beiden Deckel 24, 26 erfolgt nach dem Öffnen der Öffnungen 20, 22. Die beiden Deckel 24, 26 sind zu einer Vorabscheideeinheit 30 kombinierbar und am Rahmen 12 anordenbar und werden/sind zum Erhalt einer Vorabscheideeinheit 30 miteinander kombiniert und am Rahmen 12 angeordnet. Das Anordnen am Rahmen 12 erfolgt in und/oder an der Einströmöffnung 20.

Die beiden Deckel 24, 26 sind in den Ansprüchen und mitunter auch in der nachfolgenden Beschreibung allgemein als erster Deckel 24 und als zweiter Deckel 26 bezeichnet, denn bestimmte Merkmale, die im Ausführungsbeispiel als am Ein- oder am Ausströmöffnungsdeckel 24, 26 verwirklich gezeigt sind, können genauso am Aus- oder am Einströmöffnungsdeckel 26, 24 verwirklicht sein. Diese Austauschbarkeit ist im Folgenden stets mitzulesen. Bezogen auf das in den Figuren gezeigte Ausführungsbeispiel ist der erste Deckel 24 der Einströmöffnungsdeckel 24 und der zweite Deckel 26 der Ausströmöffnungsdeckel 26. Dies bezieht sich lediglich auf das in den Figuren gezeigte Ausführungsbeispiel und ist nicht einschränkend auszulegen.

Zum Kombinieren der beiden Deckel 24, 26 werden zwei dafür vorgesehene, gegenüberliegende Seiten eines der beiden Deckel 24, 26 (beim Ausführungsbeispiel des ersten Deckels 24 / des Einströmöffnungsdeckels 24) umgeknickt. Bei den gegenüberliegenden Seiten handelt es sich um nach dem Öffnen der Einströmöffnung 20 freie Seiten des Einströmöffnungsdeckels 24, so dass das Umknicken möglich ist.

Das Umknicken erfolgt um einen Winkel von 90° oder zumindest im Wesentlichen 90° relativ zur verbleibenden Fläche des Deckels 24. Aufgrund des Umknickens ergeben sich an den gegenüberliegenden Seiten umgeknickte Laschen 32, 34 (erste Lasche 32, zweite Lasche 34). In der Darstellung in Figur 4 ist die zweite Lasche 34 durch den Deckel 24 selbst verdeckt. Diese beiden Laschen 32, 34 werden beim Kombinieren der Deckel 24, 26 in randständige, schlitzartige Ausnehmungen 36, 38 (Fig. 3) im anderen Deckel 26 (beim Ausführungsbeispiel der zweite Deckel 26 / der Ausströmöffnungsdeckel 26) eingesteckt und sind bei kombinierten Deckeln 24, 26 in diese eingesteckt. Die Ausnehmungen 36, 38 sind randständige Ausnehmungen 36, 38, weil sie von einer der Kanten (der Randlinie) des Deckels 26 ausgehen. Die Ausnehmungen 36, 38 sind optional quer zur angrenzenden Randlinie oder zumindest im Wesentlichen quer zu dieser Randlinie des Deckels 26 orientiert. Die Kante mit den Ausnehmungen 36, 38 wird zur Bezugnahme als erste Kante 40 bezeichnet. Die gegenüberliegende Kante ist die zweite Kante 42.

Durch das Einstecken in die Ausnehmungen 36, 38 werden/sind die Laschen 32, 34 in der umgeknickten Konfiguration fixiert. Die umgeknickten Laschen 32, 34 stabilisieren den Deckel 24. Jede umgeknickte Lasche 32, 34 bildet mit der angrenzenden Fläche des Deckels 24 ein L-Profil und dieses verleiht dem Deckel 24 eine erhebliche Stabilität.

Zur Verbesserung der Haltbarkeit der Kombination der beiden Deckel 24, 26 sind bevorzugt ein langgestreckter Schlitz 44 in einem der beiden Deckel 24 und eine randständige, blattartige Abstellung 46 am anderen Deckel 26 vorgesehen. Beim Ausführungsbeispiel weist der Deckel 24 mit den seitlichen Laschen 32, 34 (der Einströmöffnungsdeckel 24; erster Deckel 24) den langgestreckten Schlitz 44 auf und zwar parallel zu der dem Schlitz 44 nächstliegenden (benachbarten) Kante. Entsprechend weist der Deckel 26 mit den randständigen Ausnehmungen 36, 38 (der Ausströmöffnungsdeckel 26; zweiter Deckel 26) die blattartige Abstellung 46 auf.

Beim Kombinieren der beiden Deckel 24, 26 (beim Einstecken der Laschen 32, 34 in die Ausnehmungen 36, 38) wird die blattartige Abstellung 46 des zweiten Deckels 26 in den langgestreckten Schlitz 44 im ersten Deckel 24 eingesteckt und bei kombinierten Deckeln 24, 26 ist die blattartige Abstellung 46 des zweiten Deckels 26 in den langgestreckten Schlitz 44 im ersten Deckel 24 eingesteckt. Die blattartige Abstellung 46 greift in den langgestreckten Schlitz 44 ein.

Bei der gezeigten Ausführungsform ergibt sich die blatt- oder federartige Abstellung 46 (blattartig im Sinne eines Schaufelblatts; federartig im Sinne einer Feder einer Nut-Feder-Verbindung) am zweiten Deckel 26 im Bereich von dessen erster Kante 40, indem der zweite Deckel 26 im Bereich der Ausnehmungen 36, 38 (also im Bereich von dessen Ecken) und in Richtung der Ausnehmungen 36, 38 stückweise gekürzt ist. Zwischen den Kürzungen im Bereich der Ecken verbleibt entlang der ersten Kante 40 ein längerer Abschnitt (länger bei einer Längenmessung entlang des Deckels 26 und quer zu dessen erster Kante 40) und dieser Bereich wird als blattartige Abstellung 46 am zweiten Deckel 26 bezeichnet.

Einer der beiden Deckel 24 (beim Ausführungsbeispiel der Deckel 24 mit den seitlichen Laschen 32, 34 / der erste Deckel 24) ist auch nach dem Öffnen der zuvor durch diesen verschlossenen Öffnung 20, nämlich der Einströmöffnung 20, stückweise mit dieser und damit mit dem Rahmen 12 verbunden. Bei diesem Deckel 24 handelt es sich also um den Einströmöffnungsdeckel 24.

Die Verbindung mit dem Rahmen 12 besteht entlang einer der Kanten der Einströmöffnung 20. Bei dieser Kante handelt es sich um eine der beiden bei einer bestimmungsgemäßen oder zumindest üblichen Aufstellung der Abscheidevorrichtung 10 horizontalen oder zumindest im Wesentlichen horizontalen Kanten und zwar um die obere dieser beiden Kanten. Die Verbindung besteht, indem der Deckel 24 an dieser Kante mit dem Rahmen 12 verbunden bleibt, während er an den anderen drei Kanten der von dem Deckel 24 zuvor verschlossenen Einströmöffnung 20 aus dem Rahmen 12 gelöst wird. Die Verbindung ist eine gelenkige Verbindung nach Art eines Filmscharniers und der Deckel 24 ist an dieser Kante schwenkbeweglich mit dem Rahmen 12 verbunden (der Deckel 24 bleibt/ist schwenkbeweglich am Rahmen 12 angelenkt). Zum Erhalt einer geraden Schwenkachse ist diese Kante bevorzugt zum Beispiel perforiert. Diese Perforation ist eine andere Perforation als die weiter oben erwähnte Perforation, welche ein Lösen des jeweiligen Deckels 24, 26 aus dem Rahmen 12 ermöglicht, nämlich eine weniger starke Perforation, so dass beim Lösen des Deckels 24 aus der Einströmöffnung 20 (im Bereich der drei anderen Kanten) diese Kante nicht ausreißt.

Beim Kombinieren der beiden Deckel 24, 26 zum Erhalt einer Vorabscheideeinheit 30 wird der Einströmöffnungsdeckel 24 nach außen geschwenkt (von der Fläche mit der Einströmöffnung 20 um einen Winkel < 90° abstehend) und ist zum Kombinieren mit dem anderen Deckel 26 (dem Ausströmöffnungsdeckel 26) nach außen geschwenkt. Das Kombinieren erfolgt bevorzugt, wie oben beschrieben, zumindest mittels der seitlichen Laschen 32, 34 und durch Einstecken der Laschen 32, 34 in die dafür vorgesehenen Ausnehmungen 36, 38. Vor oder nach dem Kombinieren der beiden Deckel 24, 26 miteinander wird/ist der gänzlich aus der Ausströmöffnung gelöste Ausströmöffnungsdeckel 26 mit einer seiner freien Kanten - zweite Kante 42 - in die Einströmöffnung 20 eingesteckt. Diese freie Kante 42 ist diejenige Kante des Ausströmöffnungsdeckels 26, welche einer Kante, in deren Bereich die beiden Deckel 24, 26 miteinander kombiniert sind, gegenüberliegt. Bei einer Kombination der beiden Deckel 24, 26 durch Einstecken der Laschen 32, 34 des Einströmöffnungsdeckels 24 in die dafür vorgesehenen Ausnehmungen 36, 38 des Ausströmöffnungsdeckels 26 ist die freie Kante 42 diejenige Kante, welche der Kante 40 mit den Ausnehmungen 36, 38 gegenüberliegt. Das Einstecken des Ausströmöffnungsdeckels 26 in die Einströmöffnung 20 erfolgt, bis dessen freie Kante 42 an eine dafür vorgesehene Begrenzung (einen dafür vorgesehenen Anschlag) im Innern des Rahmens 12 stößt. Als Begrenzung (Anschlag) fungiert zum Beispiel das mindestens eine Abscheideelement 14 im Innern des Rahmens 12 oder eines der Abscheideelemente 14 im Innern des Rahmens 12. Das Einstecken des Ausströmöffnungsdeckels 26 in die Einströmöffnung 20 erfolgt also nur zu einem kleinen Teil und der größte Teil des Ausströmöffnungsdeckels 26 verbleibt außerhalb des Rahmens 12. Der in die Einströmöffnung 20 eingesteckte Ausströmöffnungsdeckel 26 greift mit seiner freien Kante 42 in den Rahmen 12 und in dessen Einströmöffnung 20 ein.

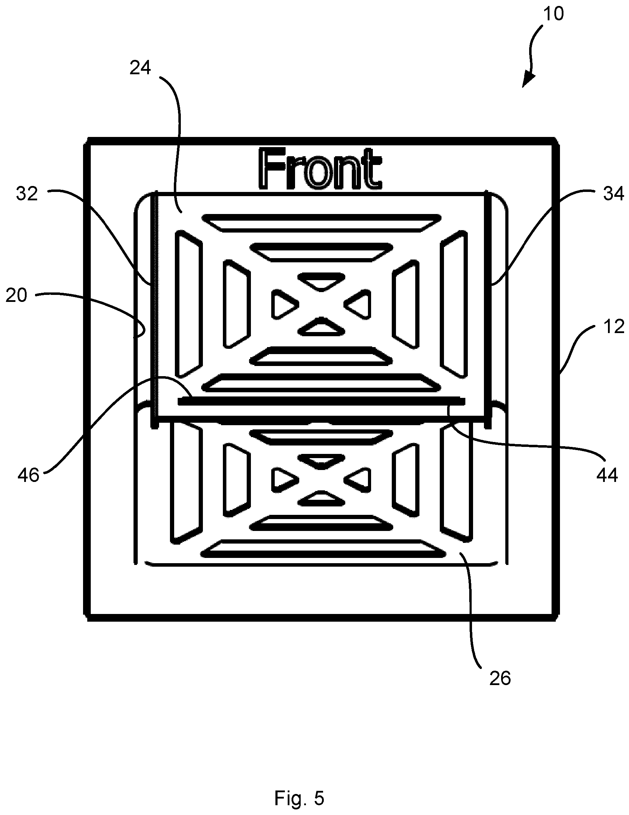

Die Darstellung in Figur 5 zeigt die Abscheidevorrichtung 10 gemäß Figur 4 mit daran angebrachter Vorabscheideeinheit 30 in einer Ansicht mit Blick zentral auf die Seite der Abscheidevorrichtung 10 mit der Einströmöffnung 20.

Der in die Einströmöffnung 20 eingesteckte Abschnitt des Ausströmöffnungsdeckels 26 - die freie Kante 42 oder ein Teil der freien Kante 42 - kann umgeknickt werden und kann bei einer an der Abscheidevorrichtung 10 angebrachten Vorabscheideeinheit 30 umgeknickt sein und mit diesem umgeknickten Abschnitt in die Einströmöffnung 20 eingesteckt sein/werden. Der umgeknickte Abschnitt reicht im eingesteckten Zustand bevorzugt im Innern des Rahmens 12 bis zum Boden des Rahmens 12.

In den Darstellungen in Figur 2 und Figur 3 sind jeweils drei Seitenflächen des Rahmens 12 sichtbar. Eine der Seitenflächen weist die jeweilige Öffnung 20, 22 (Ein- oder Ausströmöffnung 20, 22) auf. Eine der Seitenflächen (in den genannten Figuren jeweils als nach oben weisende Fläche gezeigt) ist vollständig geschlossen. Die danach verbleibende Fläche der gezeigten drei Seitenflächen ist der Bodenbereich oder der Deckelbereich des Rahmens 12 (der Deckelbereich wird/ist nach dem Platzieren des zumindest einen Abscheideelements 14 im Rahmen 12 geschlossen). Anhand dieser Seitenflächen ist die Orientierung der Öffnungen 20, 22 und damit auch die Orientierung der Deckel 24, 26 erkennbar. Im Falle von Öffnungen 20, 22 mit ungleichen Längen der jeweils parallelen Kanten (rechteckige, nicht quadratische Öffnungen 20, 22) ist dies Wesentlich. Die längeren Kanten der Öffnungen 20, 22 bestimmen die Breite der Öffnungen 20, 22. Die kürzen Kanten der Öffnungen 20, 22 bestimmen deren Höhe. Die Breite und die Höhe der beiden Öffnungen 20, 22 ist jeweils gleich oder zumindest im Wesentlichen gleich.

Bei solchen rechteckigen Öffnungen 20, 22 sind die beiden Deckel 24, 26 im noch mit dem Rahmen verbundenen Zustand mit ihrer längsten Achse jeweils um 90° zueinander gedreht. Beim Kombinieren der beiden Deckel 24, 26 wird der Ausströmöffnungsdeckel 26 nach dem Entfernen aus der Ausströmöffnung 22 gedreht, so dass dessen kurze Kanten 40, 42 parallel zu den langen Kanten der Einströmöffnung 20 sind. Der Abstand zwischen den langen Kanten des Ausströmöffnungsdeckels 26 (quer zu den langen Kanten gemessen) ist kleiner als die Breite der Einströmöffnung 20. Der Ausströmöffnungsdeckel 26 (oder dessen freie Kante 42 oder ein Teil der freien Kante 42) kann daher beim Kombinieren der beiden Deckel 24, 26 zum Erhalt der Vorabscheideeinheit 30 leicht in die Einströmöffnung 20 eingesteckt werden.

Der Rahmen 12 nimmt das zumindest eine Abscheideelement 14 bevorzugt in einem Paßsitz auf. Wenn eine solche Aufnahme in einem Paßsitz gegeben ist, schließt das zumindest eine Abscheideelement 14 zumindest mit einem zunächst geringen Übermaß und einer daraus resultierenden Stauchung des Abscheideelements 14 oder des jeweiligen Abscheideelements 14 zumindest an die Seitenwand des Rahmens 12 mit der Einströmöffnung 20 und die gegenüberliegende Seitenwand an. Dann ist/wird die in die Einströmöffnung 20 eingeführte freie Kante 42 oder ein Teil der freien Kante 42 des Ausströmöffnungsdeckels 26 dort zwischen die Innenseite der Seitenfläche des Rahmens 12 mit der Einströmöffnung 20 und dem zumindest einen im Rahmen 12 im Paßsitz aufgenommenen Abscheideelement 14 eingeklemmt. Das Einklemmen erfolgt zwischen der Innenseite der Seitenfläche des Rahmens 12 mit der Einströmöffnung 20 einerseits und dem zumindest einen im Rahmen 12 im Paßsitz aufgenommenen Abscheideelement 14 andererseits. Das Einklemmen erfolgt, indem das zumindest eine im Rahmen 12 im Paßsitz aufgenommene Abscheideelement 14 die freie Kante 42 oder einen Teil der freien Kante 42 des Ausströmöffnungsdeckels 26 gegen die Innenseite der Seitenfläche des Rahmens 12 mit der Einströmöffnung 20 drückt. In dieser Konfiguration ist die eingeklemmte freie Kante 42 oder ein Teil der freien Kante 42 des Ausströmöffnungsdeckels 26 zumindest in einem für eine Verwendung der Vorabscheideeinheit 30 beim Abscheiden von mit einem Rohgasstrom mitgeführten Partikeln ausreichenden Maße besonders gut fixiert.

Der Nutzer kann die Deckel 24, 26 werkzeuglos vollständig aus dem Rahmen 12 entfernen und entsorgen, wenn die Nutzung der Deckel 24, 26 als Vorabscheideeinheit 30 nicht gewünscht ist.

Die Deckel 24, 26 können auch separat zugeliefert werden, zum Beispiel in Form von Zuschnitten mit der hier beschriebenen Form und den hier beschriebenen Eigenschaften. Solche Deckel 24, 26 stammen dann nicht aus dem Rahmen 12. Die Kombination solcher Deckel 24, 26 erfolgt ebenfalls wie hier beschrieben. Das Anbringen an einem Rahmen 12 einer Abscheidevorrichtung 10 erfolgt zum Beispiel durch Formschluß oder durch Einstecken, Kleben, Tackern oder dergleichen.

Einzelne im Vordergrund stehende Aspekte der hier eingereichten Beschreibung lassen sich damit kurz wie folgt zusammenfassen: Angegeben wird eine Abscheidevorrichtung 10 zum Abscheiden von mit einem Rohgasstrom mitgeführten Partikeln. Die Abscheidevorrichtung 10 umfasst einen Rahmen 12 zur Aufnahme zumindest eines Abscheideelements 14 sowie im betriebsbereiten Zustand zwei Öffnungen 20, 22 - Einströmöffnung 20, Ausströmöffnung 22 - im Rahmen 12. Das vor dem Öffnen der Öffnungen 20, 22 die Öffnungen 20, 22 verschließende Rahmenmaterial ist zum Erhalt einer an der Abscheidevorrichtung 10 anbringbaren Vorabscheideeinheit 30 verwendbar. Dafür fungiert das vor dem Öffnen der Öffnungen 20, 22 die Öffnungen 20, 22 verschließende Rahmenmaterial als erster Deckel 24 und als zweiter Deckel 26. Die beiden Deckel 24, 26 werden nach dem Öffnen der Öffnungen 20, 22 zu einer Vorabscheideeinheit 30 kombiniert und sind nach dem Öffnen der Öffnungen 20, 22 zu einer Vorabscheideeinheit 30 kombinierbar und im Bereich der Einströmöffnung 20 am Rahmen 12 anordenbar bzw. angeordnet.

### Bezugszeichenliste

- 10: Abscheidevorrichtung
- 12: Rahmen
- 14: Abscheideelement
- 16,18: (frei)
- 20: Öffnung, Einströmöffnung
- 22: Öffnung, Ausströmöffnung
- 24: Deckel, erster Deckel, Einströmöffnungsdeckel
- 26: Deckel, zweiter Deckel, Ausströmöffnungsdeckel
- 28: Loch
- 30: Vorabscheideeinheit
- 32: erste seitliche Lasche
- 34: zweite seitliche Lasche
- 36: randständige Ausnehmung
- 38: randständige Ausnehmung
- 40: erste Kante
- 42: zweite Kante
- 44: Schlitz
- 46: Abstellung

## Patentansprüche

1. Verfahren zum Erhalt einer zusammen mit einer zum Abscheiden von mit einem Rohgasstrom mitgeführten Partikeln bestimmten Abscheidevorrichtung (10) verwendbaren Vorabscheideeinheit (30),
wobei die Abscheidevorrichtung (10) einen Rahmen (12) zur Aufnahme zumindest eines Abscheideelements (14) sowie im betriebsbereiten Zustand zwei Öffnungen (20, 22) - EinströmÖffnung (20), Ausströmöffnung (22) - im Rahmen (12) aufweist,
wobei das vor dem Öffnen der Öffnungen (20, 22) die Öffnungen (20, 22) verschließende Rahmenmaterial als erster Deckel (24) und als zweiter Deckel (26) fungiert und
wobei die beiden Deckel (24, 26) nach dem Öffnen der Öffnungen (20, 22) zum Erhalt der Vorabscheideeinheit (30) kombiniert werden und die Vorabscheideeinheit (30) im Bereich der Einströmöffnung (20) am Rahmen (12) angeordnet wird.

2. Verfahren nach Anspruch 1,
wobei durch Umknicken zweier gegenüberliegender Seiten eines der beiden Deckel (24) an diesem seitliche Laschen (32, 34) gebildet werden und
wobei diese seitlichen Laschen (32, 34) beim Kombinieren der Deckel (24, 26) zu einer Vorabscheideeinheit (30) in Ausnehmungen (36, 38) im anderen Deckel (26) eingesteckt werden, nämlich in von einer Randlinie des anderen Deckels (26) ausgehende Ausnehmungen (36, 38).

3. Verfahren nach Anspruch 1 oder 2,
wobei der Deckel (24) mit den seitlichen Laschen (32, 34) auch nach dem Öffnen der jeweiligen Öffnung (20) stückweise mit dieser verbunden ist,
wobei es sich bei dieser Öffnung (20) um die Einströmöffnung (20) handelt,
wobei der mit der Einströmöffnung (20) stückweise verbunden bleibende Deckel (24) beim Kombinieren der Deckel (24, 26) zu einer Vorabscheideeinheit (30) von der Fläche mit der Einströmöffnung (20) nach außen geschwenkt wird und
wobei der andere Deckel (26) vollständig aus der Öffnung (22) - Ausströmöffnung (22) - gelöst und zum Erhalt der Vorabscheideeinheit (30) mit dem Deckel (24) kombiniert wird.

## Claims

1. A method for obtaining a pre-separation unit (30) that can be used in conjunction with a separation device (10) for separating particles carried along with a raw gas stream,
wherein the separation device (10) has a frame (12) for receiving at least one separation element (14) as well as, in the operational state, two openings (20, 22) - an inlet opening (20) and an outlet opening (22) - in the frame (12),
wherein, prior to opening the openings (20, 22), the frame material closing the openings (20, 22) functions as a first cover (24) and as a second cover (26), and
wherein the two covers (24, 26) are combined after the openings (20, 22) have been opened to obtain the pre-separation unit (30), and the pre-separation unit (30) is arranged on the frame (12) in the area of the inlet opening (20).

2. The method according to claim 1,
wherein lateral tabs (32, 34) are formed by folding down two opposite sides of one of the two covers (24) thereon, and
wherein said lateral tabs (32, 34) are inserted into recesses (36, 38) in the other cover (26) when the covers (24, 26) are combined to form a pre-separation unit (30), namely into recesses (36, 38) extending from an edge line of the other cover (26).

3. The method according to claim 1 or 2,
wherein the cover (24), with the lateral tabs (32, 34), remains connected in segments to the respective opening (20) even after the opening (20) has been opened,
wherein said opening (20) is the inlet opening (20),
wherein the cover (24), remaining connected in segments to the inlet opening (20), is pivoted outward from the surface with the inlet opening (20) when the covers (24, 26) are combined to form a pre-separation unit (30), and
wherein the other cover (26) is completely detached from the opening (22) - outlet opening (22) - and is combined with the cover (24) to obtain the pre-separation unit (30).

## Revendications

1. Procédé d'obtention d'une unité de pré-séparation (30) utilisable conjointement avec un dispositif de séparation (10) destiné à séparer des particules entraînées par un flux de gaz brut,
dans lequel le dispositif de séparation (10) comprend un cadre (12) destiné à recevoir au moins un élément de séparation (14) ainsi que, à l'état prêt à fonctionner, deux ouvertures (20, 22) - une ouverture d'entrée (20), une ouverture de sortie (22) - ménagées dans le cadre (12),
dans lequel le matériau du cadre qui ferme les ouvertures (20, 22) avant leur ouverture sert de premier couvercle (24) et de deuxième couvercle (26) et
dans lequel les deux couvercles (24, 26) sont combinés après l'ouverture des ouvertures (20, 22) pour obtenir l'unité de pré-séparation (30) et l'unité de pré-séparation (30) est disposée sur le cadre (12) au niveau de l'ouverture d'entrée (20).

2. Procédé selon la revendication 1,
dans lequel, par pliage de deux côtés opposés de l'un des deux couvercles (24), des languettes latérales (32, 34) sont formées sur celui-ci et
dans lequel ces languettes latérales (32, 34), lors de la combinaison des couvercles (24, 26) pour former une unité de pré-séparation (30), sont insérées dans des évidements (36, 38) ménagés dans l'autre couvercle (26), les évidements (36, 38) s'étendant à partir d'une ligne périphérique de l'autre couvercle (26).

3. Procédé selon la revendication 1 ou 2,
dans lequel le couvercle (24) comportant les languettes latérales (32, 34) reste relié par pièce à l'ouverture (20) même après l'ouverture de celle-ci,
dans lequel cette ouverture (20) est l'ouverture d'entrée (20),
dans lequel le couvercle (24) reste relié par pièce à l'ouverture d'entrée (20), étant pivoté vers l'extérieur à partir de la surface comportant l'ouverture d'entrée (20) lors de la combinaison des couvercles (24, 26) pour former une unité de pré-séparation (30) et
dans lequel l'autre couvercle (26) est totalement détaché de l'ouverture (22) - ouverture de sortie (22) - et combiné avec le couvercle (24) pour obtenir l'unité de pré-séparation (30).
